# EUROPÄISCHE PATENTANMELDUNG

(11) **EP 4 279 875 A1**
(43) Veröffentlichungstag der Anmeldung: **22.11.2023**
(21) Anmeldenummer: 22174118.4
(22) Anmeldetag: 18.05.2022
(51) Int. Cl.: G01D 5/245

(54) **SENSORSYSTEM, ELEKTRISCHER MOTOR MIT SENSORSYSTEM UND VERFAHREN ZUM MESSEN EINES WINKELS EINES ELEKTRISCHEN MOTORS**

(71) Anmelder: Siemens Aktiengesellschaft, 80333 München (DE)
(72) Erfinder: Bachmann, Christian, 80686 München (DE); Bergmann, Dominik, 83679 Sachsenkam (DE); Ebelsberger, Gerit, 81737 München (DE); Freitag, Reinhard, 82008 Unterhaching (DE); Gerlich, Matthias, 80636 München (DE); Pais, Guillaume, 81667 München (DE); Röhrl, Verena, 81241 München (DE)
(74) Vertreter: Siemens Patent Attorneys

(57) **Zusammenfassung**

Die Erfindung betrifft ein Sensorsystem, einen elektrischen Motor mit Sensorsystem und ein Verfahren zum Messen eines Winkels eines elektrischen Motors. Das Sensorsystem zum Messen eines Winkels eines elektrischen Motors mit einem Stator und einem Rotor, wobei der Rotor wenigstens ein Paar von Permanentmagneten aufweist, umfasst eine ringförmige Leiterplatte mit wenigstens drei fest mit der Leiterplatte verbundenen digitalen Hallsensoren. Der Mittelpunkt der Leiterplatte ist axial zu einer Hauptachse des Rotors eines bestimmungsgemäß angeordneten Motors angeordnet ist, wobei die drei Hallsensoren in einem elektrischen Winkel von 120° zu den bestimmungsgemäß angeordneten Permanentmagneten des Motors angeordnet sind und die Leiterplatte fest mit dem Motor verbindbar ist.

## Beschreibung

Die Erfindung betrifft ein Sensorsystem zum Messen eines Winkels eines elektrischen Motors und einen elektrischen Motor mit Sensorsystem.

Die Anzahl an elektrisch betriebenen Fahrzeugen im Straßenverkehr nimmt stetig zu. Insbesondere das Ziel einer nachhaltigen Verkehrswirtschaft erfordert den Einsatz einer hohen Zahl an elektrisch betriebenen Fahrzeugen.

Diese elektrisch betriebenen Fahrzeuge benötigen elektrische Motoren. Elektrische Motoren werden nicht nur zum Antrieb des Fahrzeugs, sondern auch zur elektrischen Lenkunterstützung und in Bremssystemen eingesetzt. Somit steigt der Bedarf an elektrischen Motoren kontinuierlich.

In diesen elektrischen Motoren ist die präzise und schnelle Bestimmung der Rotorposition essenziell für ein akkurates Betreiben der Motoren.

Insbesondere der Einsatz von Permanentmagnet-Synchronmaschinen umfassend einen Rotor und einen Stator nimmt aufgrund ihrer Robustheit und Zuverlässigkeit zu.

Es ist bekannt externe Positionsencoder einzusetzen. Die Erfassung der Position des Motors kann mittels optischer oder induktiver Verfahren durchgeführt werden. Es sind auch externe Positionsencoder bekannt, die Hallsensoren und Permanentmagnete umfassen, welche derart angeordnet sind, dass sie die Permanentmagnete des Motors abbilden können. Die Messung der Position des Rotors erfolgt dabei indirekt über die Magneten des Mess-Systems.

Nachteilig ist dieser Messaufbau groß und steht einer kompakten Bauweise des Motors entgegen. Weiterhin muss die Messanordnung sehr präzise montiert werden, um ausreichend genaue Positionsdaten zu ermitteln. Das macht das Positionieren des Messanordnung nachteilig aufwendig. Weiterhin ist die Messanordnung so komplex, dass ihr Preis nachteilig den Einbau des Messsystems in Synchronmotoren, insbesondere in kleinen Synchronmaschinen aufweisend weniger als 1 kW Leistung, nicht wirtschaftlich sinnvoll ermöglich, da hier der Preis der Messanordnung den Preis der elektrischen Maschine übersteigen kann.

Es ist somit Aufgabe der vorliegenden Erfindung ein Sensorsystem für eine Positionsbestimmung eines Synchronmotors, einen Synchronmotor mit Sensorsystem und ein Verfahren zum Bestimmen eines Winkels eines Motors anzugeben, welche die Nachteile überwindet, also zuverlässig, zu geringen Kosten und mit wenig Montageaufwand einsetzbar ist.

Die Aufgabe wird erfindungsgemäß mit einem Sensorsystem gemäß Anspruch 1, einem elektrischen Motor mit Sensorsystem gemäß Anspruch 6 und einem Verfahren gemäß Anspruch 14 gelöst.

Das erfindungsgemäße Sensorsystem zum Messen eines Winkels eines elektrischen Motors mit einem Stator und einem Rotor, wobei der Rotor wenigstens ein Paar von Permanentmagneten aufweist, umfasst eine ringförmige Leiterplatte. Die ringförmige Leiterplatte ist fest mit wenigstens drei digitalen Hallsensoren verbunden. Der Mittelpunkt der Leiterplatte ist axial zu einer Hauptachse eines Rotors eines bestimmungsgemäß angeordneten Motors angeordnet, wobei die drei Hallsensoren in einem elektrischen Winkel von 120° zu den bestimmungsgemäß angeordneten Permanentmagneten des Motors angeordnet sind. Die Leiterplatte ist fest mit dem Motor verbindbar.

Der erfindungsgemäße elektrische Motor mit Sensorsystem zum Messen eines Winkels des elektrischen Motors umfasst einen Motor mit einem Stator und einem Rotor, wobei der Rotor wenigstens ein Paar von Permanentmagneten aufweist und sich um eine Hauptachse dreht. Der elektrische Motor umfasst weiterhin eine ringförmige Leiterplatte mit wenigstens drei fest mit der Leiterplatte verbundenen digitalen Hallsensoren. Der Mittelpunkt der Leiterplatte ist axial zur Hauptachse des Motors angeordnet, die Grundfläche der Leiterplatte ist orthogonal zur Hauptachse angeordnet. Die drei Hallsensoren sind dabei in einem elektrischen Winkel von 120° zu den Permanentmagneten des Motors zum direkten Messen des Magnetfelds der Permanentmagneten angeordnet und die Leiterplatte ist fest mit dem Motor verbunden.

Das erfindungsgemäße Verfahren zum Messen eines Winkels des elektrischen Motors mit einem Stator und einem Rotor, wobei der Rotor wenigstens ein Paar von Permanentmagneten aufweist und sich um eine Hauptachse dreht, umfasst mehrere Schritte. Zunächst erfolgt das Bereitstellen eines elektrischen Motors mit einem erfindungsgemäßen Sensorsystem oder das Bereitstellen eines erfindungsgemäßen elektrischen Motors. Anschließend erfolgt das unmittelbare Erfassen eines Magnetfelds der Permanentmagneten des Motors mittels der digitalen Hallsensoren und das Ausgeben wenigstens eines Signals durch die Hallsensoren. Anschließend erfolgt das Auswerten der Signale und Ermitteln der Lage der Permanentmagneten des Motors.

Das erfindungsgemäße Sensorsystem ermöglicht das direkte Messen der Permanentmagneten des Motors. Somit kann die Position des Motors direkt anhand der Permanentmagneten des Motors bestimmt werden. Dieser Sensoraufbau mit digitalen Hallsensoren benötigt keine eigenen Permanentmagneten, was ihn deutlich vorteilhaft kompakter im Vergleich zum Stand der Technik macht und kleinere Baugrößen des gesamten elektrischen Motors ermöglicht. Weiterhin ist der Aufbau der Sensorsystems im Vergleich zum Stand der Technik weniger komplex. Dies vereinfacht die Montage des Sensorsystems. Weiterhin werden auch die Kosten des Sensorsystems im Vergleich zum Stand der Technik gesenkt.

In einer vorteilhaften Ausgestaltung und Weiterbildung der Erfindung sind die Hallsensoren derart angeordnet, dass sie ein Magnetfeld der Permanentmagneten eines bestimmungsgemäß angeordneten Motors axial zur Hauptachse des Motors erfassen. Vorteilhaft sind die Hallsensoren demnach derart angeordnet, dass sie das Magnetfeld des Motors direkt erfassen können der erfindungsgemäße Messaufbau benötigt vorteilhaft keine eigenen Permanentmagneten. Vorteilhaft kann somit die Position des Rotors zuverlässig und effizient erfasst werden.

In einer weiteren vorteilhaften Ausgestaltung und Weiterbildung der Erfindung sind die Hallsensoren als zweidimensionale Hallsensoren ausgestaltet, wobei die Hallsensoren derart angeordnet sind, dass sie das Magnetfeld eines bestimmungsgemäß eingesetzten Permanentmagneten des Motors direkt axial und radial zur Hauptachse erfassen. Somit wird ein Messsignal mit einem 90° Unterschied erfasst. Als Folge erhöht sich die Genauigkeit der Messung von einem elektrischen Winkel von 60° hin zu einem elektrischen Winkel von 30°. Die Anzahl der Hallsensoren bleibt dabei vorteilhaft konstant. Somit wird die Auflösung der Messung erhöht, der Aufbau der Messanordnung bleibt aber konstant und somit kompakt. Vorteilhaft ermöglicht das Einsetzen der zweidimensionalen Hallsensoren eine Verbesserung des Drehmoments der Motorwelle und eine Verbesserung der Geschwindigkeitsmessung. Die Geschwindigkeit wird als Ableitung der Position ermittelt. Sie wird somit indirekt gemessen, bzw. aus der Position errechnet. Durch eine häufigere Abtastung wird vorteilhaft ein Quantisierungsrauschen verringert.

In einer weiteren vorteilhaften Ausgestaltung und Weiterbildung der Erfindung umfassen die zweidimensionalen Hallsensoren zwei digitale Ausgänge. Somit kann die Position des Rotors vorteilhaft mit der Genauigkeit eines elektrischen Winkels von 30° vorteilhaft digital erfasst und ausgewertet werden.

In einer weiteren vorteilhaften Ausgestaltung und Weiterbildung der Erfindung ist die ringförmige Leiterplatte als offener Ring oder als geschlossener Ring ausgestaltet. Vorteilhaft kann der offene Ring, der eine Lücke in der kreisförmigen Grundstruktur aufweist, auch orthogonal, also von der Seite auf die Hauptachse des Motors geschoben werden und somit vorteilhaft einfach montiert werden. Ein geschlossener Ring wird axial zur Hauptachse des Motors montiert. Ein geschlossener Ring weist vorteilhaft eine hohe Stabilität auf.

In einer weiteren vorteilhaften Ausgestaltung und Weiterbildung der Erfindung sind die Hallsensoren derart angeordnet, dass sie das Magnetfeld der Permanentmagneten axial zur Hauptachse erfassen. Vorteilhaft kann somit die Position des Rotors umfassend die Permanentmagneten präzise bestimmt werden, um die elektrische Synchronmaschine zuverlässig zu betreiben.

In einer weiteren vorteilhaften Ausgestaltung und Weiterbildung der Erfindung sind die Permanentmagneten und die Hallsensoren auf demselben Radius zur Hauptachse angeordnet. In anderen Worten ist der Abstand der Permanentmagneten zur Hauptachse und der Abstand der Hallsensoren zur Hauptachse derselbe. Vorteilhaft erfolgt die Positionsmessung der Permanentmagneten mit diesem Aufbau sehr präzise.

In einer weiteren vorteilhaften Ausgestaltung und Weiterbildung der Erfindung sind die Permanentmagneten und die Hallsensoren zueinander versetzt in Richtung der Hauptachse angeordnet. In anderen Worten weisen die Permanentmagneten und die Hallsensoren einen Abstand zueinander auf. Die Hallsensoren berühren die Permanentmagneten somit nicht. Der Abstand ist derart gewählt, dass die Hallsensoren das Magnetfeld ausreichend gut erfassen können, die Permanentmagneten sich dabei aber frei bewegen können. Der Abstand kann insbesondere auch mittels der Finiten-Element-Methode oder auch durch Messung per Magnetfeldsonde bestimmt werden. Es wird dann an der Messstelle die Flussdichte bestimmt. Die erforderliche Flussdichte ist dabei abhängig vom konkret eingesetzten Hallsensor (insbesondere vom Modelltyp).

In einer weiteren Ausgestaltung und Weiterbildung der Erfindung ist der Abstand der Permanentmagneten zu den Hallsensoren in einem Toleranzbereich von unter 1 mm. Der Abstand der Permanentmagneten von den Hallsensoren darf in anderen Worten bei der Montage weniger als 1 mm von dem vorgegebenen Abstand abweichen, um eine ausreichende Präzise Messung zu gewährleisten.

In einer weiteren vorteilhaften Ausgestaltung und Weiterbildung der Erfindung sind die Hallsensoren auf der den Permanentmagneten zugewandten Seite der Leiterplatte angeordnet. Vorteilhaft können die Hallsensoren somit das Magnetfeld der Permanentmagneten ausreichend präzise erfassen.

In einer weiteren vorteilhaften Ausgestaltung und Weiterbildung der Erfindung ist einem Mikrocontroller mit der Leiterplatte fest verbunden. Der Mikrocontroller ist dazu geeignet, die Signale der Hallsensoren zu verarbeiten und über eine Schnittstelle, insbesondere BISS-C oder SPI, zu übertragen. Vorteilhaft kann das digitale Signal der digitalen Hallsensoren somit bereits in der Messanordnung erfasst und verarbeitet werden. Dies unterstützt die kompakte Bauweise der Messanordnung vorteilhaft zusätzlich.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
Figur 1 einen Rotor mit Permanentmagneten und einer Welle;
Figur 2 einen elektrischen Motor mit einem Stator, einem Rotor mit Permanentmagneten, einer Welle und einem Sensorsystem mit Leiterplatte und Hallsensoren;
Figur 3 ein Sensorsystem mit Leiterplatte und digitalen Hallsensoren und einer Welle;
Figur 4 eine Leiterplatte mit zweidimensionalen digitalen Hallsensoren und eine Welle;
Figur 5 einen elektrischen Motor mit einem Stator, einem Rotor mit Permanentmagneten, einer Welle und einer Leiterplatte mit Hallsensoren, den Magnetfeldern und der Analyserichtung der Hallsensoren;
Figur 6 Signale dreier digitaler zweidimensionaler Hallsensoren in Abhängigkeit des elektrischen Winkels.

Alle Figuren beschreiben unterschiedliche Ansichten und Aspekte eines Ausführungsbeispiels.

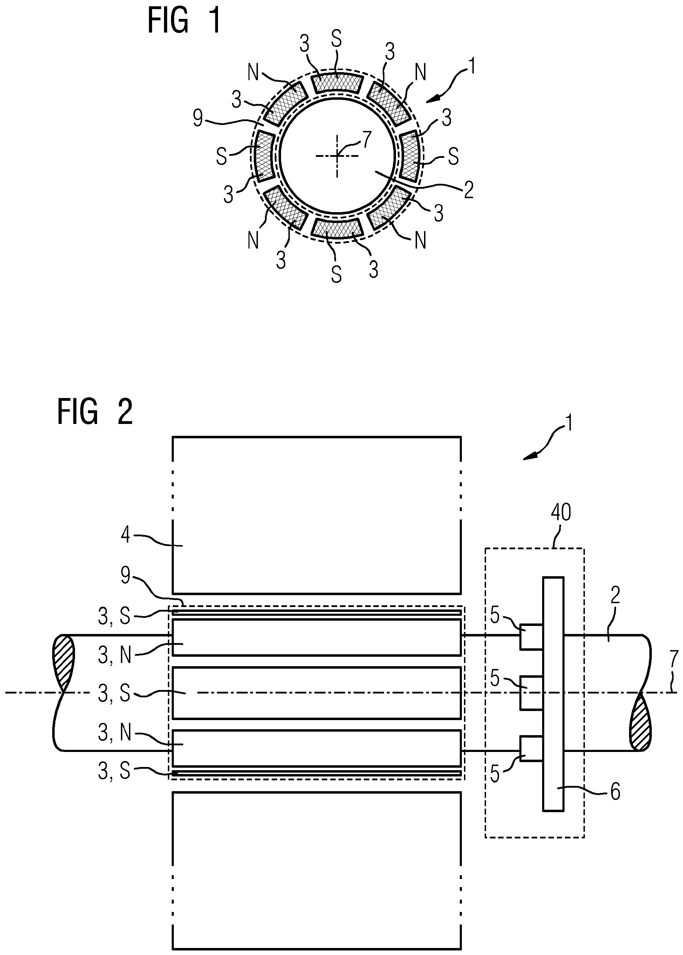

Figur 1 zeigt einen Schnitt eines elektrischen Motors 1 mit einer Welle 2 und einem Rotor 9, welcher Permanentmagneten 3 umfasst. In diesem Beispiel umfasst der Rotor vier Paare von Permanentmagneten 3. Es ist aber ebenso möglich, dass die Anzahl der Permanentmagnete einem anderen Vielfachen von zwei entspricht. Die Permanentmagnete 3 sind derart angeordnet, dass sich ein Nordpol N mit einem Südpol S abwechselt. In der Mitte der Welle verläuft die Hauptachse 7 des elektrischen Motors 1.

Figur 2 zeigt eine Seitenansicht des elektrischen Motors 1. Wie bereits in Figur 1 gezeigt, umfasst der Motor 1 einen Rotor 9 mit Permanentmagneten 3, und eine Welle 2, welche in Richtung der Hauptachse 7 angeordnet ist. Weiterhin ist der Rotor 9 in diesem Beispiel von dem Stator 4, welcher Wicklungen aufweist, umgeben. In Figur 2 ist weiterhin ein Sensorsystem 40 mit einer Leiterplatte 6 mit drei digitalen Hallsensoren 5 abgebildet. Es ist weiterhin zu sehen, dass die Permanentmagneten des elektrischen Motors 1 und die Hallsensoren 5 auf demselben Radius zur Hauptachse 7 angeordnet sind. Der Abstand der Permanentmagneten 3 zur Hauptachse 7 und der Abstand der Hallsensoren 5, 31, 32, 33 zur Hauptachse 7 ist derselbe.

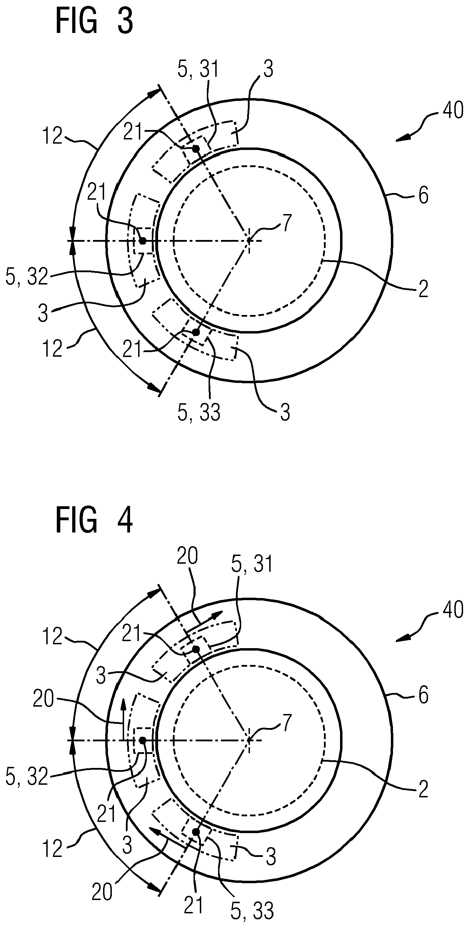

Figur 3 zeigt die axiale Ansicht, also den Blick parallel zur Hauptachse 7 auf das Sensorsystem 40 mit der Leiterplatte 6 und den Hallsensoren 5 des elektrischen Motors 1. Die Hallsensoren 5 sind in einem elektrischen Winkel 12 von 120° modulo 360° angeordnet. Es ist ein erster Hallsensor 31, ein zweiter Hallsensor 32 und ein dritter Hallsensor 33 auf der Leiterplatte 6 angeordnet und fest mit der Leiterplatte 6 verbunden. Die Leiterplatte 6 ist, nicht in der Figur dargestellt, fest mit dem Stator 4 oder einer Motorumhausung verbunden. Werden als Hallsensoren 5 digitale eindimensionale Hallsensoren eingesetzt, so messen diese das Magnetfeld in axialer Richtung der Hauptachse 7. In diesem Ausführungsbeispiel werden, wie in Figur 4 gezeigt, digitale zweidimensionale Hallsensoren eingesetzt. Diese Messen das Magnetfeld der Permanentmagneten des elektrischen Motors 1 in axialer Richtung 21 und in radialer Richtung 20.

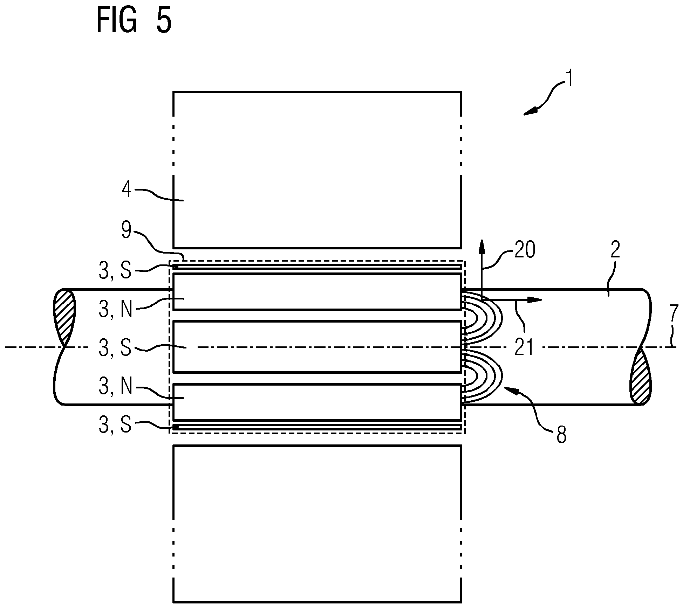

Figur 5 zeigt den elektrischen Motor 1 wiederum in einer Seitenansicht, wobei die Magnetfelder 8 der Permanentmagneten 3 dargestellt sind. Weiterhin ist die Messrichtung eines zweidimensionalen Hallsensors in axialer Richtung 21 und in radialer Richtung 20 dargestellt.

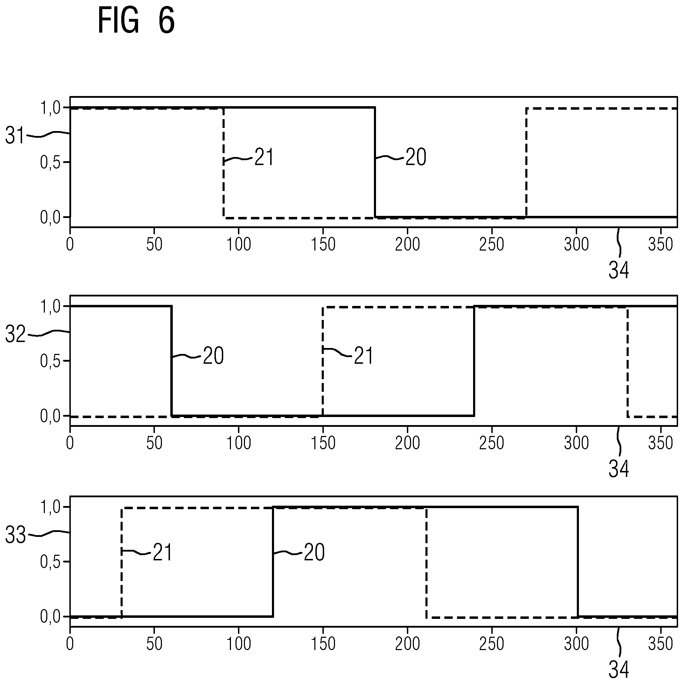

Figur 6 zeigt das Signal des ersten Hallsensors 31, das Signal des zweiten Hallsensors 32 und das Signal des dritten Hallsensors 33 in Abhängigkeit des elektrischen Winkels 34.

Der erste Hallsensor 31 misst das Magnetfeld des elektrischen Motors 1 in axialer Richtung 21 und in radialer Richtung 20. In axialer Richtung 21 erfasst der erste Hallsensor 31 das Magnetfeld der Permanentmagneten 3 bei einem elektrischen Winkel von 180° und 360 °C. In radialer Richtung 20 erfasst der erste Hallsensor 31 das Magnetfeld der Permanentmagneten 3 bei einem elektrischen Winkel von 90° und 270°. Der zweite Hallsensor 32 erfasst in axialer Richtung 21 das Magnetfeld bei 60° und 240°, in radialer Richtung 20 bei 150° und 330°. Der dritte Hallsensor 33 erfasst das Magnetfeld der Permanentmagneten 3 in einem Winkel von 120° und 300° in axialer Richtung 21 und von 30° und 210° in radialer Richtung 20. Somit erfolgt die Positionsmessung der Permanentmagneten 3 des Motors 1 mit einer Genauigkeit von 30° elektrischen Winkel, und wird vorteilhaft leidglich mit drei digitalen zweidimensionalen Hallsensoren 31, 32, 33 ausgeführt. Alternativ kann die Erhöhung der Genauigkeit erfolgen, indem sechs eindimensionale Hallsensoren anstelle der drei zweidimensionalen Hallsensoren eingesetzt werden.

Obwohl die Erfindung im Detail durch das bevorzugte Ausführungsbeispiel näher illustriert und beschrieben wurde, ist die Erfindung nicht durch das offenbarte Beispiel eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: elektrischer Motor
- 2: Welle
- 3: Permanentmagnet
- 4: Stator mit Wicklungen
- 5: Hall-Sensor
- 6: Leiterplatte
- 7: Hauptachse
- 8: magnetische Felder
- 9: Rotor

- 12: erster elektrischer Winkel

- 20: radiale Messrichtung
- 21: axiale Messrichtung

- 31: Messsignal erster zweidimensionaler Hallsensor
- 32: Messsignal zweiter zweidimensionaler Hallsensor
- 33: Messsignal dritter zweidimensionaler Hallsensor
- 34: elektrischer Winkel

- 40: Sensorsystem

- N: Nordpol
- S: Südpol

## Patentansprüche

1. Sensorsystem (40) zum Messen eines Winkels eines elektrischen Motors (1) mit einem Stator (4) und einem Rotor (9), wobei der Rotor (9) wenigstens ein Paar von Permanentmagneten (3) aufweist, umfassend:
- eine ringförmige Leiterplatte (6) mit wenigstens drei fest mit der Leiterplatte verbundenen digitalen Hallsensoren (5, 31, 32, 33), wobei der Mittelpunkt der Leiterplatte (6) axial zu einer Hauptachse (7) des Rotors (9) eines bestimmungsgemäß angeordneten Motors (1) angeordnet ist, wobei die drei Hallsensoren (5, 31, 32, 33) in einem elektrischen Winkel von 120° zu den bestimmungsgemäß angeordneten Permanentmagneten (3) des Motors (1) angeordnet sind und die Leiterplatte (6) fest mit dem Motor (1) verbindbar ist.

2. Sensorsystem (40) nach Anspruch 1, wobei die Hallsensoren (5, 31, 32, 33) derart angeordnet sind, dass sie ein Magnetfeld der Permanentmagneten (3) eines bestimmungsgemäß angeordneten Motors (1) axial zur Hauptachse (7) des Motors (1) erfassen.

3. Sensorsystem (40) nach einem der vorhergehenden Ansprüche, wobei die Hallsensoren (5, 31, 32, 33) als zweidimensionale Hallsensoren ausgestaltet sind, wobei die Hallsensoren (5, 31, 32, 33) derart angeordnet sind, dass sie das Magnetfeld (8) eines bestimmungsgemäß eingesetzten Permanentmagneten (3) des Motors (1) direkt axial (21) und radial (20) zur Hauptachse erfassen.

4. Sensorsystem (40) nach Anspruch 3, wobei die zweidimensionalen Hallsensoren (5, 31, 32, 33) zwei digitale Ausgänge umfassen.

5. Sensorsystem (40) nach einem der vorhergehenden Ansprüche, wobei die ringförmige Leiterplatte (6) als offener Ring oder als geschlossener Ring ausgestaltet ist.

6. Elektrischer Motor (1) mit Sensorsystem (40) zum Messen eines Winkels des elektrischen Motors (1), umfassend:
- einen Motor (1) mit einem Stator (4) und einem Rotor (9), wobei der Rotor (9) wenigstens ein Paar von Permanentmagneten (3) aufweist und sich um eine Hauptachse (7) dreht,
- eine ringförmige Leiterplatte (6) mit wenigstens drei fest mit der Leiterplatte (6) verbundenen digitalen Hallsensoren (5, 31, 32, 33), wobei der Mittelpunkt der Leiterplatte (6) axial (21) zur Hauptachse (7) des Motors (1) angeordnet ist und eine Grundfläche der Leiterplatte (6) orthogonal zur Hauptachse (7) angeordnet ist,
wobei die drei Hallsensoren (5, 31, 32, 33) in einem elektrischen Winkel von 120° zu den Permanentmagneten (3) des Motors (1) zum direkten Messen des Magnetfelds (8) der Permanentmagneten (3) des Motors (1) angeordnet sind und die Leiterplatte (6) fest mit dem Motor (1) verbunden ist.

7. Elektrischer Motor (1) mit Sensorsystem (40) nach Anspruch 6, wobei die Hallsensoren (5, 31, 32, 33) derart angeordnet sind, dass sie das Magnetfeld (8) der Permanentmagneten (3) axial (21) zur Hauptachse (7) erfassen.

8. Elektrischer Motor (1) mit Sensorsystem (40) nach einem der Ansprüche 6 oder 7, wobei die Hallsensoren (5, 31, 32, 33) als zweidimensionale Hallsensoren ausgestaltet sind, wobei die Hallsensoren (5, 31, 32, 33) derart angeordnet sind, dass sie das Magnetfeld (8) der Permanentmagneten (3) direkt axial (21) und radial (20) zur Hauptachse (7) erfassen.

9. Elektrischer Motor (1) mit Sensorsystem (40) nach einem der Ansprüche 6 bis 8, wobei die Permanentmagneten (3) und die Hallsensoren (5, 31, 32, 33) auf demselben Radius zur Hauptachse (7) angeordnet sind.

10. Elektrischer Motor (1) mit Sensorsystem (40) nach einem der Ansprüche 6 bis 9, wobei die Permanentmagneten (3) und die Hallsensoren (5, 31, 32, 33) zueinander versetzt in Richtung der Hauptachse (7) angeordnet sind.

11. Elektrischer Motor (1) mit Sensorsystem (40) nach einem der Ansprüche 6 bis 10, wobei der Abstand der Permanentmagneten (3) zu den Hallsensoren (5, 31, 32, 33) in einem Toleranzbereich von unter 1 mm liegt.

12. Elektrischer Motor (1) mit Sensorsystem (40) nach einem der Ansprüche 6 bis 11, wobei die Hallsensoren (5, 31, 32, 33) auf der den Permanentmagneten (3) zugewandten Seite der Leiterplatte (6) angeordnet sind.

13. Elektrischer Motor (1) mit Sensorsystem (40) nach einem der Ansprüche 6 bis 12 mit einem fest mit der Leiterplatte (6) verbundenen Mikrocontroller, der geeignet ist, die Signale der Hallsensoren (5, 31, 32, 33) zu verarbeiten und über eine Schnittstelle, insbesondere BISS-C oder SPI, zu übertragen.

14. Verfahren zum Messen eines Winkels des elektrischen Motors (1) mit einem Stator (4) und einem Rotor (9), wobei der Rotor (9) wenigstens ein Paar von Permanentmagneten (3) aufweist und sich um eine Hauptachse (7) dreht, umfassend mehrere Schritte:
- Bereitstellen eines elektrischen Motors (1) mit einem Sensorsystem (40) gemäß einem der Ansprüche 1 bis 5 oder einem elektrischen Motor (1) mit Sensorsystem (40) gemäß einem der Ansprüche 6 bis 14;
- Unmittelbares Erfassen eines Magnetfelds (8) der Permanentmagneten (3) des Motors (1) mittels der digitalen Hallsensoren (5, 31, 32, 33) und Ausgeben wenigstens eines Signales erzeugt von den digitalen Hallsensoren (5, 31, 32, 33);
- Auswerten der Signale und Ermitteln der Lage der Permanentmagneten (3).
